# EUROPEAN PATENT APPLICATION

(11) **EP 4 789 799 A1**
(43) Date of publication of application: **12.08.2026**
(21) Application number: 25215251.7
(22) Date of filing: 12.11.2025
(51) Int. Cl.: B23H 7/26

(54) **SMALL-HOLE ELECTRICAL DISCHARGE MACHINE**

(30) Priority: 06.02.2025 JP 2025018527
(71) Applicant: ELENIX INC., Zama-shi, Kanagawa (JP)
(72) Inventor: Yokomichi, Shigeharu, Zama-shi, Kanagawa (JP); Ishiwata, Tomoshige, Zama-shi, Kanagawa (JP)
(74) Representative: Grünecker Patent- und Rechtsanwälte PartG mbB

(57) **Abstract**

The small-hole electrical discharge machine (1) includes an electrode holder exchange device (21) configured to exchange an electrode holder (25) mounted on a processing head (7); and an electrode exchange device (23) configured to exchange an electrode (11) mounted on the electrode holder (25) that is supported by an electrode holder exchange device (21). The electrode exchange device (23) includes an exchange unit (51) configured to release the electrode (11) from a state of being fixed to the electrode holder (25), and fix the unused electrode (11) to the electrode holder (25), a discharge unit (52) configured to discharge the electrode (11) from the electrode holder (25), and an insertion unit (53) configured to insert the unused electrode (11) into the electrode holder (25).

## Description

### [TECHNICAL FIELD]

The present invention relates to a small-hole electrical discharge machine.

### [BACKGROUND ART]

Patent Literature 1 discloses a small-hole electrical discharge machine, in which an electrode holder exchange device supporting multiple electrode holders is arranged on a side of a processing head, as conventionally known.

In the small-hole electrical discharge machine disclosed in Patent Literature 1, electrodes are mounted on the electrode holders. The electrode holders are attached and detached to and from the processing head by an electrode holder exchange device, so that unused electrodes are mounted on the processing head.

### [CITATION LIST]

### [PATENT LITERATURE]

Patent Literature 1: Japanese Unexamined Patent Application No. H8-290332

### [SUMMARY OF THE INVENTION]

However, in the conventional small-hole electrical discharge machine described above, an operator manually removes the electrodes from the electrode holders and installs unused electrodes, since the electrodes cannot be automatically exchanged from the electrode holders which are supported by the electrode holder exchange device. Therefore, there is a problem that the small-hole electrical discharge machine cannot be operated continuously for a long period of time, and the operating rate of the small-hole electrical discharge machine decreases.

A small-hole electrical discharge machine according to the present invention includes an electrode holder exchange device configured to exchange an electrode holder mounted on a processing head that performs small-hole electrical discharge machining; and an electrode exchange device configured to exchange an electrode mounted on the electrode holder that is supported by the electrode holder exchange device; in which the electrode exchange device includes: an exchange unit configured to release the electrode from a state of being fixed to the electrode holder; and when the electrode that has been released is discharged from the electrode holder and an unused electrode is inserted, fix the unused electrode to the electrode holder, a discharge unit configured to discharge the electrode from the electrode holder when the electrode is released from the state of being fixed to the electrode holder; and an insertion unit configured to insert the unused electrode into the electrode holder when the electrode is discharged from the electrode holder.

According to the small-hole electrical discharge machine according to the present invention, the electrodes mounted on the electrode holders can be automatically exchanged to enable a continuous operation for a long period of time, so that the operation rate of the small-hole electrical discharge machine can be improved.

### [BRIEF DESCRIPTION OF DRAWINGS]

FIG. 1 is a perspective view illustrating a structure of a small-hole electrical discharge machine according to an embodiment.
FIG. 2 is a side view illustrating a structure of an electrode holder exchange device and an electrode exchange device of the small-hole electrical discharge machine according to an embodiment.
FIG. 3 is a top view illustrating a structure of an electrode holder exchange device and an electrode exchange device of the small-hole electrical discharge machine according to an embodiment.
FIG. 4 is a cross-sectional view illustrating a structure of an electrode holder used in the small-hole electrical discharge machine according to an embodiment.
FIG. 5 is a flowchart illustrating a processing procedure of electrode exchange processing by an electrode exchange device of the small-hole electrical discharge machine according to an embodiment.
FIG. 6A is a view for explaining a process of inserting clamp claws and opening claws in the electrode exchange processing.
FIG. 6B is a view for explaining a process of pulling out a clamp rod from a holder body in the electrode exchange processing.
FIG. 6C is a view for explaining a process of discharging an electrode in the electrode exchange processing.
FIG. 6D is a view illustrating a state in which discharging an electrode in the electrode exchange processing is completed.
FIG. 6E is a view for explaining a process of inserting an electrode in the electrode exchange processing.
FIG. 6F is a view for explaining a process of returning a clamp rod to a holder body in the electrode exchange processing.

### [DESCRIPTION OF EMBODIMENTS]

The small-hole electrical discharge machine according to this embodiment will be described below with reference to the drawings.

### [Structure of Small-Hole Electrical Discharge Machine]

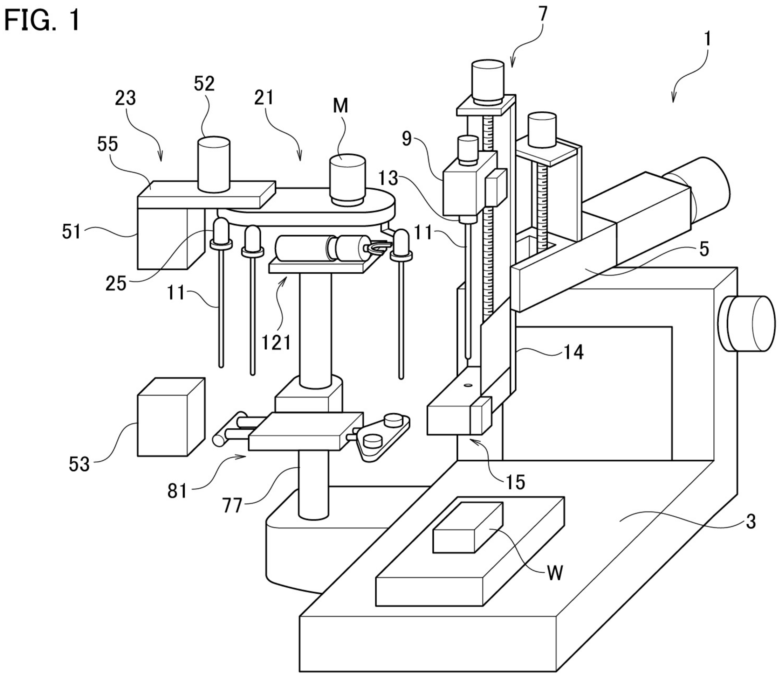

FIG. 1 is a perspective view illustrating a structure of a small-hole electrical discharge machine according to this embodiment. As illustrated in FIG. 1, a small-hole electrical discharge machine 1 includes a work table 3 for supporting a workpiece W. A slider 5 is provided at a position above the work table 3 so that it can be freely moved in the front-back and left-right directions and can be freely positioned.

A processing head 7 whose vertical position is freely adjustable is attached to the slider 5. A main shaft head 9 whose vertical position is freely adjustable is mounted on the processing head 7. The main shaft head 9 is provided with a main shaft 13 which is freely rotatable. The main shaft 13 can hold and fix an upper end of an electrode 11 in the shape of a pipe. An electrode guide device 15 for guiding and supporting the electrode 11 is provided at a lower end of a lifting frame 14 in the processing head 7. The electrode guide device 15 is equipped with an electrode guide for guiding and supporting the lower end of the electrode 11 mounted on the processing head 7.

The small-hole electrical discharge machine 1 includes an electrode holder exchange device 21 and an electrode exchange device 23. The electrode holder exchange device 21 is provided at an upper end of a post 77 erected on a side of the small-hole electrical discharge machine 1, and exchanges an electrode holder 25 mounted on the processing head 7 to perform small-hole electrical discharge machining.

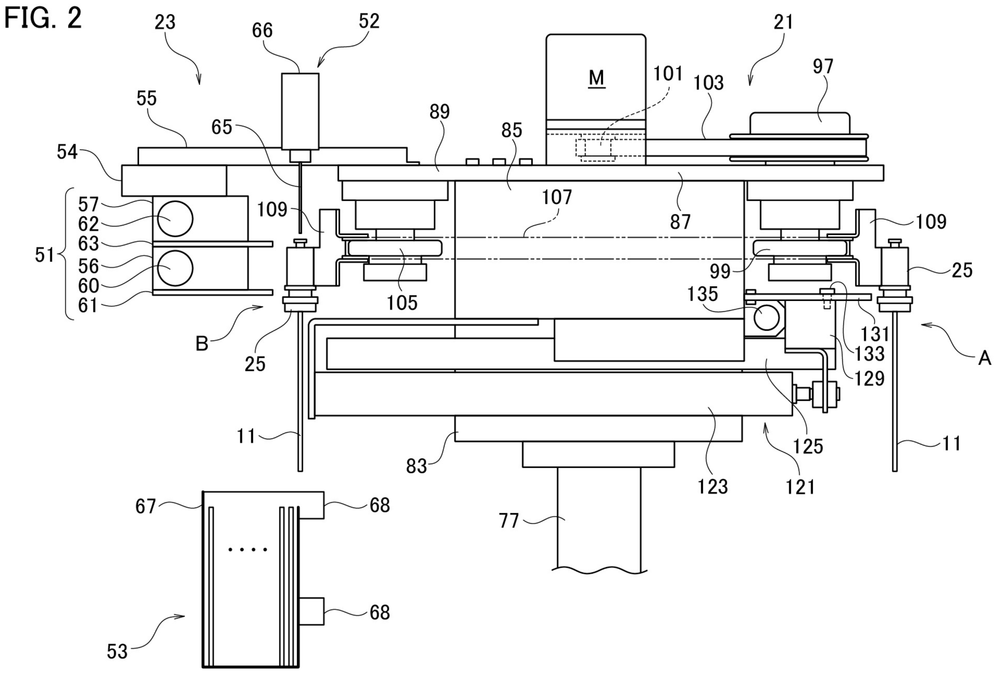

As illustrated in FIG. 2, the electrode holder exchange device 21 includes a hollow member 83 mounted on the upper end of the post 77 and a support body 85 mounted on an upper part of the hollow member 83. A first bracket 87 with a tip part projecting in a direction of the processing head 7 is integrally mounted on the support body 85 by bolts or the like, and a second bracket 89 with a tip part projecting in a direction opposite to the first bracket 87 is detachably attached to the support body 85 by bolts or the like.

A rotary shaft is vertically and rotatably supported on a tip of the first bracket 87. A driven pulley 97 is attached to an upper end of the rotary shaft, and a chain sprocket 99 is attached to a lower end of the rotary shaft. A timing belt 103 is hung between the driven pulley 97 and a drive pulley 101 that is attached to a drive shaft of a servomotor M mounted on the first bracket 87.

A chain sprocket 105 is rotatably supported at a tip of the second bracket 89, and an endless chain 107 is horizontally hung around the support body 85 between the chain sprocket 105 and the chain sprocket 99.

Therefore, the endless chain 107 can be horizontally driven by driving the servomotor M. A plurality of holder support members 109 for detachably supporting the electrode holders 25 are attached to an outer periphery of the endless chain 107. Many holder support members 109 may be attached at a predetermined pitch, or only two holder support members 109 may be attached.

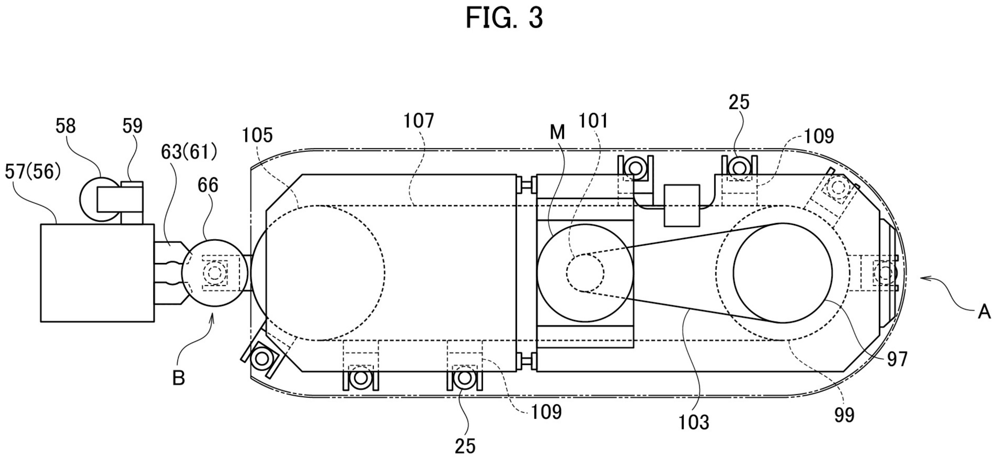

For example, as illustrated in FIG. 3, four holder support members 109 may be set as one group, and two groups of holder support members 109 may be attached, or one holder support member 109 may be each arranged at an electrode holder exchange position A and an electrode exchange position B. The electrode holder exchange position A is adjacent to the processing head 7, and is a position where the electrode holders 25 are exchanged between the processing head 7. The electrode exchange position B is located on an opposite side of the electrode holder exchange position A, and is a position where the electrode 11 is exchanged.

The holder support members 109 each include a recess for engaging and supporting one electrode holder 25. The recess is open toward the outside, and a ball plunger or a magnet is provided for fixing and holding the electrode holders 25. Therefore, the electrode holders 25 can be attached to and detached from the holder support members 109 from the outside.

Here, the electrode holders 25 having electrode 11 with different diameters may be supported by four holder support members 109 included in one group. For example, electrode holders 25 having electrode 11 with four different diameters of 1.0 mm, 1.2 mm, 1.5 mm, and 1.8 mm are supported. That is, the electrode holder exchange device 21 supports a plurality of the electrode holders 25 each with an unused electrode 11 having a different diameter mounted. Thus, it is possible to easily process small-holes with various diameters.

The electrode holder exchange device 21 includes an electrode holder transfer device 121, as illustrated in FIG. 2. The electrode holder transfer device 121 is provided to supply the electrode holders 25 supported by the holder support members 109 to the processing head 7 at the electrode holder exchange position A. The electrode holder transfer device 121 also simultaneously takes in the electrode holders 25 mounted on the processing head 7 into the holder support members 109 that are empty.

Specifically, the electrode holder transfer device 121 includes a reciprocating operation device 123 which is a gas pressure cylinder. The reciprocating operation device 123 is arranged on the support body 85, and a slide bar 125 is integrally connected to a tip part of the reciprocating operation device 123 via a bracket. The slide bar 125 is supported by the support body 85 to freely reciprocate, and a support block 129 is attached to a tip part of the slide bar 125.

A pair of holding claws 131, between which the electrode holder 25 is inserted and held, are attached to a tip end side of an upper surface of the support block 129 to be freely opened and closed by a pin 133, and an actuator 135 for opening and closing the holding claws 131 is attached to a base side of the holding claws 131.

When the electrode holders 25 are exchanged, a servomotor M is driven to move and position a desired holder support member 109 at the electrode holder exchange position A, and the holding claws 131 of the electrode holder transfer device 121 are held in an open state to operate the reciprocating operation device 123. Thus, the support block 129 is advanced, and the electrode holder 25 located at the electrode holder exchange position A is inserted between the holding claws 131.

Thereafter, when the actuator 135 operates in a direction of closing the holding claws 131, the electrode holder 25 is clamped and held between the pair of holding claws 131. Then, when the support block 129 is further advanced, the electrode holder 25 held by the holder support member 109 is removed from the holder support member 109, and transferred to the processing head 7 to be mounted thereon.

When the electrode holder 25 is taken from the processing head 7, an empty holder support member 109 is firstly positioned at the electrode holder exchange position A. Then, the electrode holder 25 is removed from the main shaft 13 of the processing head 7 by the electrode holder transfer device 121, and the electrode holder 25 is transferred to the empty holder support member 109.

When the electrode holder 25 mounted on the processing head 7 is exchanged by the electrode holder exchange device 21 in this manner, the main shaft head 9 is lowered relative to the lifting frame 14 of the processing head 7, so that the small-hole electrical discharge machining is performed by the electrode 11 to the workpiece W on the work table 3. At this point, the electrode guide corresponding to the diameter of an unused electrode 11, which is mounted on the processing head 7, is mounted on the electrode guide device 15. The electrode guide can be exchanged by an electrode guide exchange device 81 provided adjacent to the electrode guide device 15.

### [Structure of Electrode Holder]

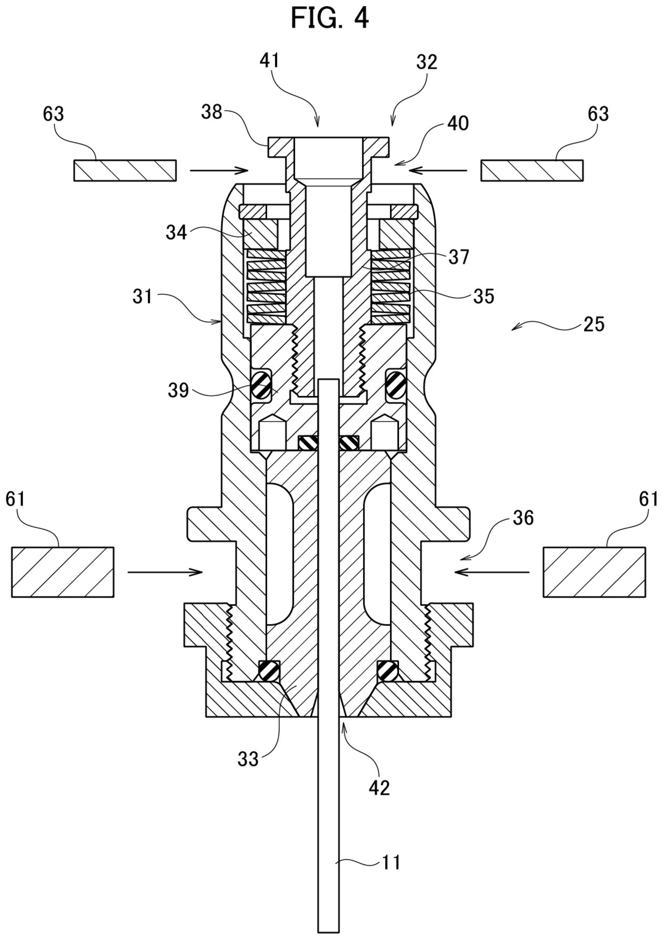

Next, the structure of the electrode holder 25 will be described with reference to FIG. 4. As illustrated in FIG. 4, the electrode holder 25 includes a holder body 31, a clamp rod 32, and a collet 33.

In the electrode holder 25, the electrode 11 protrudes from a lower end of the holder body 31, and the clamp rod 32 is inserted from an upper end of the holder body 31. When the clamp rod 32 is pulled out from the holder body 31 to exchange the electrode 11, the electrode 11 in a fixed state is released, and when the clamp rod 32 is returned to the holder body 31, the unused electrode 11 is fixed.

The holder body 31 has a cylindrical shape, and contains the clamp rod 32, the collet 33, a sealing member 34, and a plate spring 35. A groove 36 is formed on an outer periphery of the holder body 31.

The clamp rod 32 is a clamp member inserted into the holder body 31 from the upper end of the holder body 31. The clamp rod 32 is movable in the vertical direction with respect to the holder body 31, and includes a rod portion 37 having a shape of a bar and inserted into the holder body 31, a head portion 38 projecting from an upper end of the rod portion 37 to the circumference, and a pressing portion 39 for pressing the collet 33 downward. A groove space 40 is formed between an upper end of the clamp rod 32 and the holder body 31. The clamp rod 32 has a through-hole 41 formed to penetrate from the upper end of the clamp rod 32 to the electrode 11 mounted on the lower end of the holder body 31.

The collet 33 is an electrode fixing member for fixing the electrode 11. The electrode 11 is inserted into an insertion hole 42 provided in a central part of the collet 33 and the collet 33 is pressed downward by the clamp rod 32 for fixing the electrode 11. A downward force is applied to the pressing portion 39 of the clamp rod 32 by the plate spring 35, so that a pressing force from the pressing portion 39 is always applied downward to the collet 33. As a result, a tapered shape of a tip of the collet 33 is engaged with a tapered shape of a tip of the holder body 31, so that a tightening force in a central direction is applied to the collet 33 to fix the electrode 11.

Conversely, when the clamp rod 32 is pulled out upward from the holder body 31 by a predetermined length, the downward pressing force by the plate spring 35 is no longer applied to the collet 33, so that the tightening force in the central direction is weakened and the electrode 11 is released from a fixed state. That is, when the clamp rod 32 is pulled out from the holder body 31, the electrode 11 is released from a fixed state, and when the clamp rod 32 is brought back into the holder body 31, the unused electrode 11 is fixed.

The sealing member 34 seals the upper end of the holder body 31, and the clamp rod 32 penetrates the central part of the sealing member 34. The plate spring 35 is disposed between the sealing member 34 and the pressing portion 39, and presses the pressing portion 39 downward.

### [Structure of Electrode Exchange Device]

Next, the structure of the electrode exchange device 23 will be described with reference to FIGS. 2 and 3. The electrode exchange device 23 exchanges the electrode 11 mounted on the electrode holder 25 that is supported by the electrode holder exchange device 21. As illustrated in FIGS. 2 and 3, the electrode exchange device 23 includes an exchange unit 51, a discharge unit 52, an insertion unit 53, and a moving cylinder 54. Among them, the exchange unit 51, the discharge unit 52, and the moving cylinder 54 are provided on a support member 55 that is fixed to the second bracket 89, and the insertion unit 53 is arranged below the electrode exchange position B.

The exchange unit 51 releases the electrode 11 from a state of being fixed to the electrode holder 25, and when the electrode 11 that has been released is discharged from the electrode holder 25 and the unused electrode 11 is inserted, the exchange unit 51 fixes the unused electrode 11 to the electrode holder 25.

Specifically, the exchange unit 51 holds and fixes the holder body 31 of the electrode holder 25, and when the holder body 31 is fixed, the clamp rod 32 is held and pulled out from the holder body 31. Thus, the electrode 11 is released from a state of being fixed to the electrode holder 25. When the unused electrode 11 is inserted into the holder body 31, the exchange unit 51 brings back the clamp rod 32 into the holder body 31. Thus, the unused electrode 11 is fixed to the electrode holder 25.

The detailed configuration of the exchange unit 51 will be described below. As illustrated in FIGS. 2 and 3, the exchange unit 51 includes a fixing unit 56, an unclamp unit 57, an unclamp cylinder 58, and an eccentric shaft 59. The fixing unit 56 includes a clamp cylinder 60 and clamp claws 61, and opens and closes the clamp claws 61 by driving the clamp cylinder 60. The unclamp unit 57 includes a clamp cylinder 62 and opening claws 63, and opens and closes the opening claws 63 by driving the clamp cylinder 62. The unclamp cylinder 58 drives the eccentric shaft 59 to move the unclamp unit 57 in the vertical direction.

The clamp claws 61 act as a holder holding member inserted into the groove 36 of the holder body 31 to hold the holder body 31. The opening claws 63 are a clamp holding member inserted into the groove space 40 between the upper end of the clamp rod 32 and the holder body 31 to hold the clamp rod 32. The exchange unit 51 holds and fixes the holder body 31 with the clamp claws 61, and when the holder body 31 is fixed, exchange unit 51 holds and pulls out the clamp rod 32 from the holder body 31 by the opening claws 63. When the unused electrode 11 is inserted into the holder body 31, the exchange unit 51 brings back the clamp rod 32 into the holder body 31.

The discharge unit 52 discharges the electrode 11 from the electrode holder 25 when the electrode 11 is released from the state of being fixed to the electrode holder 25. The discharge unit 52 includes a discharge pin 65 in the shape of a bar and a discharge cylinder 66 for driving the discharge pin 65 in the vertical direction, and discharges the electrode 11 by inserting the discharge pin 65 into the through-hole 41 of the clamp rod 32.

When the electrode 11 is discharged from the electrode holder 25, the insertion unit 53 inserts the unused electrode 11 into the electrode holder 25. Specifically, the insertion unit 53 stores the unused electrode 11, and when the electrode 11 is discharged from the holder body 31, the insertion unit 53 inserts the unused electrode 11 from the lower end of the holder body 31. The insertion unit 53 includes an electrode stocker 67 for storing many unused electrodes 11, and an electrode clamper 68 for gripping one electrode 11 from the electrode stocker 67 and inserting it into the electrode holder 25.

The moving cylinder 54 is provided on the lower surface of the support member 55, and moves in a lateral direction to move the exchange unit 51 between a standby position and the electrode exchange position B.

### [Electrode Exchange Method]

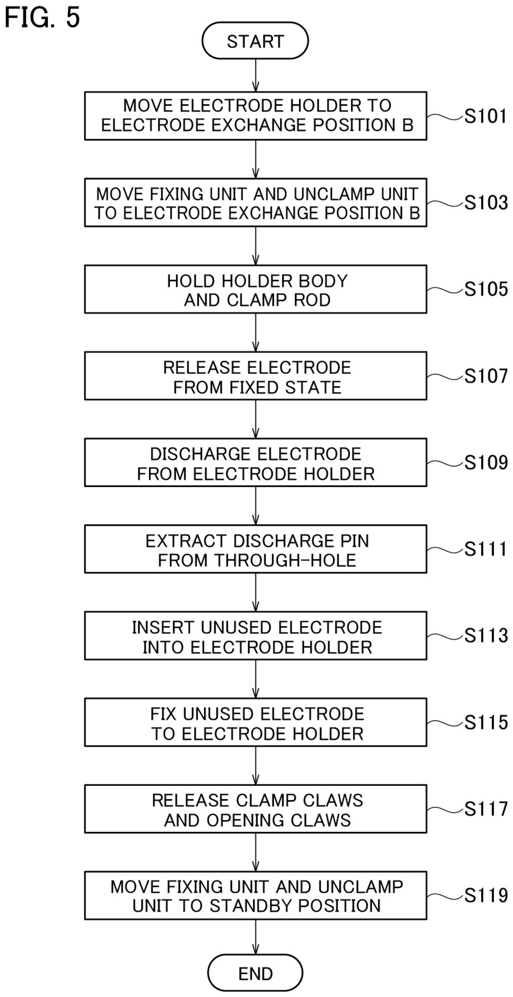

Next, with reference to FIG. 5, an electrode exchange method by the electrode exchange device 23 will be described. FIG. 5 is a flowchart illustrating a processing procedure of electrode exchange processing by the electrode exchange device 23 according to this embodiment.

As illustrated in FIG. 5, in step S101, the electrode holder 25 with the electrode 11 mounted thereon, which has been processed, is moved to the electrode exchange position B. The electrode holder exchange device 21 takes in the electrode holder 25 with the processed electrode 11 mounted thereon from the processing head 7, and moves it from the electrode holder exchange position A to the electrode exchange position B.

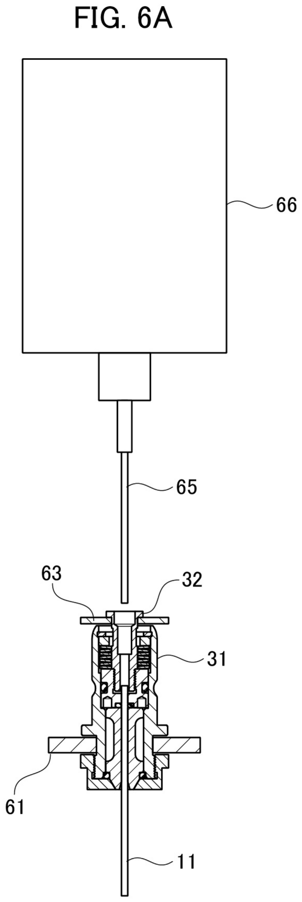

In step S103, the fixing unit 56 and the unclamp unit 57 are moved from a standby position to the electrode exchange position B in which the electrode holder 25 is supported by the moving cylinder 54. At this point, as illustrated in FIG. 6A, the clamp claws 61 are inserted into the groove 36 of the holder body 31, and the opening claws 63 are inserted into the groove space 40 formed between the upper end of the clamp rod 32 and the holder body 31.

In step S105, the clamp cylinder 60 is driven to hold the holder body 31 with a pair of the clamp claws 61, and the clamp cylinder 62 is driven to hold the clamp rod 32 with a pair of the opening claws 63.

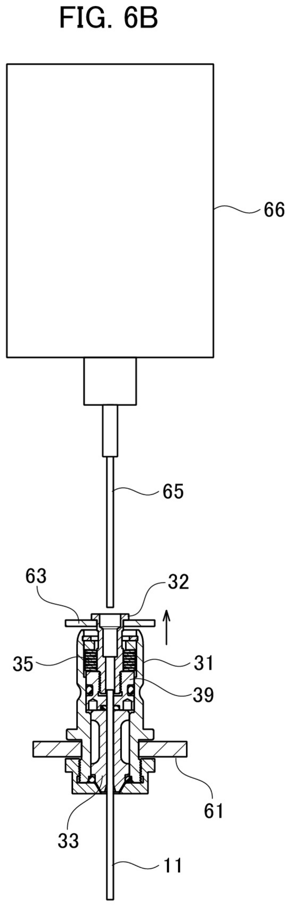

In step S107, the electrode 11 mounted on the electrode holder 25 is released from a fixed state. When the unclamp cylinder 58 rotates the eccentric shaft 59, the opening claws 63 rise, as illustrated in FIG. 6B, and the clamp rod 32 is pulled out upward from the holder body 31 by a predetermined length, due to the holder body 31 fixed by the clamp claws 61. As a result, the pressing portion 39 moves upward against the downward force of the plate spring 35, and a gap is formed at the top and bottom of the collet 33, so that a tightening force on the electrode 11 no longer acts and the electrode 11 is released from the fixed state.

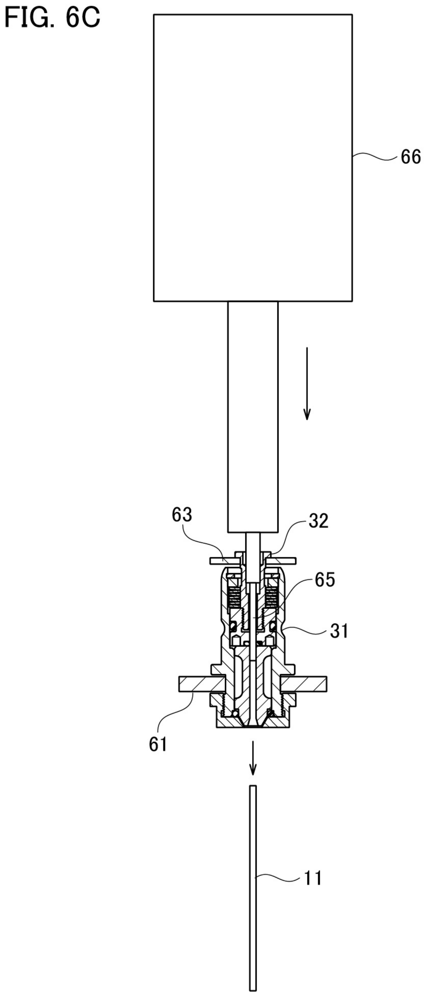

In step S109, the electrode 11 is discharged from the electrode holder 25 by the discharge unit 52. As illustrated in FIG. 6C, the discharge cylinder 66 is driven to lower the discharge pin 65, and the electrode 11 is discharged by inserting the discharge pin 65 into the through-hole 41 of the clamp rod 32.

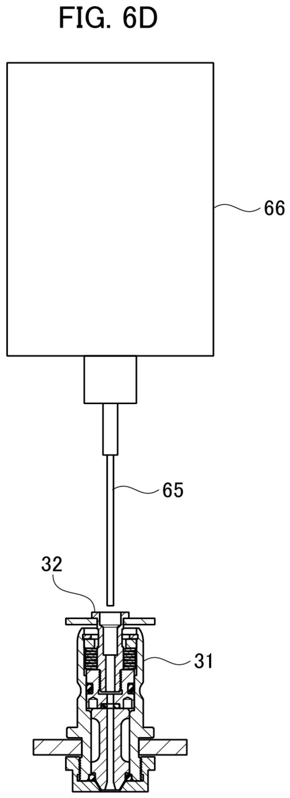

In step S111, as illustrated in FIG. 6D, the discharge cylinder 66 is driven to raise the discharge pin 65, thereby extracting it from the through-hole 41 of the clamp rod 32 to end the process of discharging the electrode 11.

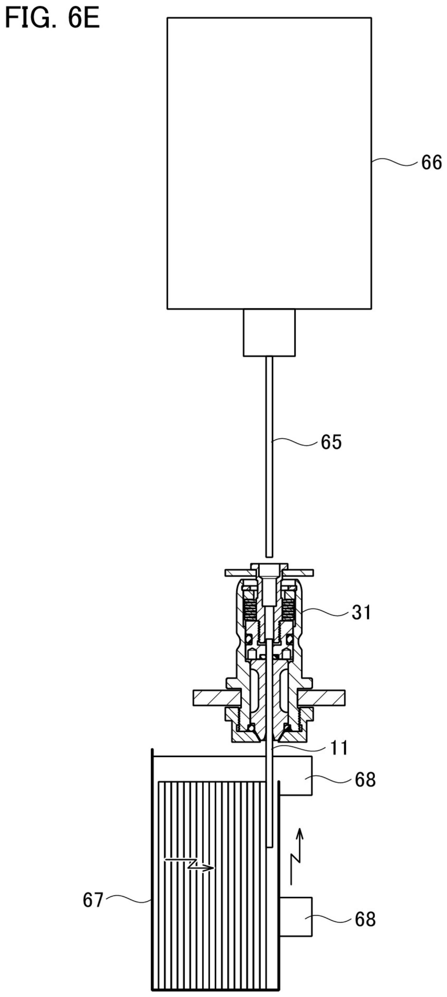

In step S113, an unused electrode 11 is inserted into the electrode holder 25. As illustrated in FIG. 6E, the electrode clamper 68 grips one electrode 11 from among many unused electrodes stored in the electrode stocker 67, and the electrode clamper 68 rises to insert the unused electrode 11 from the lower end of the holder body 31.

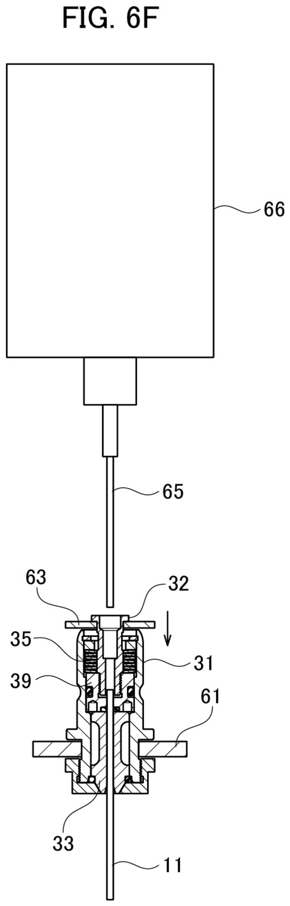

In step S115, the unused electrode 11 is fixed to the electrode holder 25. When the unclamp cylinder 58 rotates the eccentric shaft 59, the opening claws 63 are lowered and the clamp rod 32 is brought back into the holder body 31, as illustrated in FIG. 6F. As a result, the pressing portion 39 is pressed downward by the downward force of the plate spring 35, and the clamp rod 32 moves downward, so the collet 33 is pressed downward and the electrode 11 is tightened and fixed.

In step S117, the clamp cylinder 60 is driven to release the pair of clamp claws 61 holding the holder body 31, and the clamp cylinder 62 is driven to release the pair of opening claws 63 holding the clamp rod 32.

In step S119, the fixing unit 56 and the unclamp unit 57 are moved from the electrode exchange position B to the standby position by the moving cylinder 54. As a result, the clamp claws 61 are pulled out from the groove 36 of the holder body 31, and the opening claws 63 are pulled out from the groove space 40 formed between the upper end of the clamp rod 32 and the holder body 31, and the electrode exchange processing according to the present embodiment ends.

### [Effect of Embodiments]

As described above in detail, the small-hole electrical discharge machine 1 according to the present embodiment includes the electrode holder exchange device 21 for exchanging the electrode holder 25 mounted on the processing head 7 that performs small-hole electrical discharge machining; and the electrode exchange device 23 for exchanging the electrode 11 mounted on the electrode holder 25 that is supported by the electrode holder exchange device 21. The electrode exchange device 23 includes the exchange unit 51 that releases the electrode 11 from a state of being fixed to the electrode holder 25, and when the electrode 11 that has been released is discharged from the electrode holder 25 and an unused electrode 11 is inserted, fixes the unused electrode 11 to the electrode holder 25, the discharge unit 52 for discharging the electrode 11 from the electrode holder 25 when the electrode 11 is released from the state of being fixed to the electrode holder 25, and an insertion unit 53 for inserting the unused electrode 11 into the electrode holder 25 when the electrode 11 is discharged from the electrode holder 25.

Thus, the electrode 11 mounted on the electrode holder 25 can be automatically exchanged, so that the small-hole electrical discharge machine 1 can be continuously operated for a long period of time and the operating rate of the small-hole electrical discharge machine 1 can be improved.

In the small-hole electrical discharge machine 1 according to the present embodiment, the electrode holder 25 includes the holder body 31 in a cylindrical shape and the clamp rod 32 inserted into the holder body 31 from an upper end of the holder body 31. In the electrode holder 25, the electrode 11 is released from a fixed state when the clamp rod 32 is pulled out from the holder body 31, and the unused electrode 11 is fixed when the clamp rod 32 is brought back into the holder body 31. Then, the exchange unit 51 holds and fixes the holder body 31, and holds and pulls out the clamp rod 32 from the holder body 31 when the holder body 31 is fixed. The exchange unit 51 brings back the clamp rod 32 into the holder body 31 when the unused electrode 11 is inserted into the holder body 31. Thus, the electrode 11 can be released by only pulling out the clamp rod 32, so that the electrode 11 can be easily released and exchanged by the exchange unit 51. Therefore, the electrode 11 mounted on the electrode holder 25 can be automatically exchanged.

Furthermore, in the small-hole electrical discharge machine 1 according to this embodiment, the groove 36 is formed on an outer periphery of the holder body 31, and the groove space 40 is formed between an upper end of the clamp rod 32 and the holder body 31. The exchange unit 51 includes the clamp claws 61 inserted into the groove 36 to hold the holder body 31, and the opening claws 63 inserted into the groove space 40 to hold the clamp rod 32; holds and fixes the holder body 31 by the clamp claws 61, and holds and pulls out the clamp rod 32 from the holder body 31 by the opening claws 63 when the holder body 31 is fixed; and brings back the clamp rod 32 into the holder body 31 when the unused electrode 11 is inserted into the holder body 31. Thus, the clamp claws 61 inserted into the groove 36 hold the holder body 31, the opening claws 63 inserted into the groove space 40 hold clamp rod 32, so that the clamp rod 32 can be reliably pulled out from the holder body 31. Therefore, the electrode 11 can be reliably released from the electrode holder 25, so that the electrode 11 mounted on the electrode holder 25 can be automatically exchanged.

In the small-hole electrical discharge machine 1 according to this embodiment, the clamp rod 32 has the through-hole 41 formed to penetrate from the upper end of the clamp rod 32 to the electrode 11 mounted on the lower end of the holder body 31. The discharge unit 52 includes the discharge pin 65 in the shape of a bar, and inserts the discharge pin 65 into the through-hole 41 to discharge the electrode 11. Thus, the electrode 11 can be easily discharged from the holder body 31, so that the electrode 11 mounted on the electrode holder 25 can be automatically exchanged.

Furthermore, in the small-hole electrical discharge machine 1 according to this embodiment, the insertion unit 53 stores the unused electrode 11, and the unused electrode 11 is inserted from the lower end of the holder body 31 when the electrode 11 is discharged from the holder body 31. Thus, the electrode 11 can be easily inserted into the holder body 31, so that the electrode 11 mounted on the electrode holder 25 can be automatically exchanged.

Further, the small-hole electrical discharge machine 1 according to this embodiment further includes the electrode guide device 15 equipped with an electrode guide for guiding and supporting the lower end of the electrode 11 mounted on the processing head 7. The electrode holder exchange device 21 supports a plurality of the electrode holders 25 each with the unused electrode 11 having a different diameter mounted. When the electrode holder 25 mounted on the processing head 7 is exchanged by the electrode holder exchange device 21, the electrode guide corresponding to the diameter of the unused electrode 11 which is mounted on the processing head 7 is mounted on the electrode guide device 15. Thus, the electrode 11 having different diameters can be mounted on the processing head 7, and an electrode guide corresponding to the mounted electrode 11 can be mounted, so that the processing of small-holes with different diameters can be performed by automatic switching.

While embodiments of the present invention have been described above, it should not be understood that the descriptions and drawings which form part of this disclosure are intended to limit the invention. Various alternative embodiments, examples and techniques of operation will be apparent to those skilled in the art from this disclosure.

## Claims

1. A small-hole electrical discharge machine (1) comprising:
an electrode holder exchange device (21) configured to exchange an electrode holder (25) mounted on a processing head (7) that performs small-hole electrical discharge machining; and
an electrode exchange device (23) configured to exchange an electrode (11) mounted on the electrode holder (25) that is supported by the electrode holder exchange device (21), wherein
the electrode exchange device (23) includes:
an exchange unit (51) configured to release the electrode (11) from a state of being fixed to the electrode holder (25), and when the electrode (11) that has been released is discharged from the electrode holder (25) and an unused electrode (11) is inserted, fix the unused electrode (11) to the electrode holder (25),
a discharge unit (52) configured to discharge the electrode (11) from the electrode holder (25) when the electrode (11) is released from the state of being fixed to the electrode holder (25), and
an insertion unit (53) configured to insert the unused electrode (11) into the electrode holder (25) when the electrode (11) is discharged from the electrode holder (25).

2. The small-hole electrical discharge machine (1) according to claim 1, wherein
the electrode holder (25) includes a holder body (31) in a cylindrical shape and a clamp member (32) inserted into the holder body (31) from an upper end of the holder body (31),
the electrode (11) is released from a fixed state when the clamp member (32) is pulled out from the holder body (31),
the unused electrode (11) is fixed when the clamp member (32) is brought back into the holder body (31),
the exchange unit (51) holds and fixes the holder body (31); holds and pulls out the clamp member (32) from the holder body (31) when the holder body (31) is fixed; and brings back the clamp member (32) into the holder body (31) when the unused electrode (11) is inserted into the holder body (31).

3. The small-hole electrical discharge machine (1) according to claim 2, wherein
a groove (36) is formed on an outer periphery of the holder body (31),
a groove space (40) is formed between an upper end of the clamp member (32) and the holder body (31),
the exchange unit (51) includes a holder holding member (61) inserted into the groove (36) to hold the holder body (31), and a clamp holding member (63) inserted into the groove space (40) to hold the clamp member (32); holds and fixes the holder body (31) by the holder holding member (61); holds and pulls out the clamp member (32) from the holder body (31) by the clamp holding member (63) when the holder body (31) is fixed; and brings back the clamp member (32) into the holder body (31) when the unused electrode (11) is inserted into the holder body (31).

4. The small-hole electrical discharge machine (1) according to claim 2, wherein
the clamp member (32) has a through-hole (41) formed to penetrate from an upper end of the clamp member (32) to the electrode (11) mounted on an lower end of the holder body (31), and
the discharge unit (52) includes a discharge pin (65) in a shape of a bar, and inserts the discharge pin (65) into the through-hole (41) to discharge the electrode (11).

5. The small-hole electrical discharge machine (1) according to claim 2, wherein
the insertion unit (53) stores the unused electrode (11) and inserts the unused electrode (11) from a lower end of the holder body (31) when the electrode (11) is discharged from the holder body (31).

6. The small-hole electrical discharge machine (1) according to claim 1, further comprising an electrode guide device (15) equipped with an electrode guide configured to guide and support a lower end of the electrode (11) mounted on the processing head (7), wherein
the electrode holder exchange device (21) supports a plurality of the electrode holders (25) each with the unused electrode (11) having a different diameter mounted,
when the electrode holder (25) mounted on the processing head (7) is exchanged by the electrode holder exchange device (21), the electrode guide corresponding to a diameter of the unused electrode (11) which is mounted on the processing head (7) is mounted on the electrode guide device (15).
